# EUROPÄISCHE PATENTANMELDUNG

(11) **EP 3 321 065 A1**
(43) Veröffentlichungstag der Anmeldung: **16.05.2018**
(21) Anmeldenummer: 17178607.2
(22) Anmeldetag: 29.06.2017
(51) Int. Cl.: B29C 64/20, B29C 64/25, B29C 64/153

(54) **VORRICHTUNG ZUR ADDITIVEN HERSTELLUNG DREIDIMENSIONALER OBJEKTE**

(30) Priorität: 14.11.2016 DE 102016121781
(71) Anmelder: CL Schutzrechtsverwaltungs GmbH, 96215 Lichtenfels (DE)
(72) Erfinder: Winiarski, Daniel, 96231 Bad Staffelstein (DE); Stammberger, Jens, 96472 Rödental (DE)
(74) Vertreter: Kohl, Fabian Hanno

(57) **Zusammenfassung**

Vorrichtung (1) zur additiven Herstellung dreidimensionaler Objekte (2) durch sukzessives schichtweises selektives Belichten und damit einhergehendes Verfestigen von Baumaterialschichten aus einem vermittels eines Energiestrahls (6) verfestigbaren Baumaterial (3), umfassend eine ein oder mehrere Rahmenkonstruktionselemente umfassende äußere Rahmenkonstruktion (4), sowie einen als gesonderte Baueinheit innerhalb der äußeren Rahmenkonstruktion (4) anordenbaren oder angeordneten Prozessblock (8), wobei an und/oder in dem Prozessblock (8) mehrere Funktionskomponenten der Vorrichtung (1) in einer definierten räumlichen Anordnung und/oder Ausrichtung angeordnet oder ausgebildet sind, wobei der Prozessblock (8) das Bezugssystem für die definierte räumliche Anordnung der an und/oder in diesem angeordneten oder ausgebildeten Funktionskomponenten der Vorrichtung (1) bildet.

## Beschreibung

Die Erfindung betrifft eine Vorrichtung zur additiven Herstellung dreidimensionaler Objekte durch sukzessives schichtweises selektives Belichten und damit einhergehendes Verfestigen von Baumaterialschichten aus einem vermittels eines erzeugten Energiestrahls verfestigbaren Baumaterial, umfassend eine ein oder mehrere Rahmenkonstruktionselemente umfassende äußere Rahmenkonstruktion.

Entsprechende Vorrichtungen zur additiven Herstellung dreidimensionaler Objekte sind, z. B. in Form von Vorrichtungen zur Durchführung selektiver Lasersinter- bzw. selektiver Laserschmelzverfahren, an und für sich bekannt. Entsprechende Vorrichtungen umfassen eine ein oder mehrere Rahmenkonstruktionselemente umfassende Rahmenkonstruktion. Die Funktionskomponenten der Vorrichtung, wie z. B. eine Belichtungseinrichtung, sind typischerweise an der äußeren Rahmenkonstruktion bzw. den dieser zugehörigen Rahmenkonstruktionselementen angeordnet.

Bis dato es üblich, dass die äußere Rahmenkonstruktion bzw. die dieser zugehörigen Rahmenkonstruktionselemente ein Bezugssystem für eine definierte räumliche Anordnung und/oder Ausrichtung der Funktionskomponenten der Vorrichtung bilden. Als Bezugssystem für eine definierte räumliche Anordnung und/oder Ausrichtung der Funktionskomponenten muss die äußere Rahmenkonstruktion in konstruktiver Hinsicht über vergleichsweise enge Toleranzen verfügen. Bei der äußeren Rahmenkonstruktion handelt es sich daher um ein sowohl in geometrisch-konstruktiver als auch in fertigungstechnischer Hinsicht vergleichsweise aufwändige Baugruppe der Vorrichtung.

Der Erfindung liegt die Aufgabe zugrunde, eine demgegenüber verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Filterelemente, Objektivelemente, Linsenelemente, etc.

Die Vorrichtung umfasst eine ein oder mehrere Rahmenkonstruktionselemente umfassende äußere Rahmen- oder Gestellkonstruktion ("Rahmenkonstruktion"). Die Rahmenkonstruktion kann eine (geschlossene) Gehäuse- bzw. Verkleidungskonstruktion der Vorrichtung bilden. Die Rahmenkonstruktion definiert sonach (im Wesentlichen) die äußere Gestalt der Vorrichtung.

Die Vorrichtung umfasst neben der Rahmenkonstruktion einen innerhalb der Rahmenkonstruktion anordenbaren bzw. angeordneten Prozessblock. An und/oder in dem Prozessblock sind mehrere Funktionskomponenten der Vorrichtung ("Funktionskomponenten") angeordnet oder ausgebildet. Der Prozessblock umfasst sonach eine oder mehrere Befestigungsschnittstellen, welche zur Befestigung wenigstens einer Funktionskomponente an dem Prozessblock eingerichtet sind. Jeweilige Befestigungsschnittstellen können eine form- und/oder kraft- und/oder stoffschlüssige Befestigung einer Funktionskomponente an dem Prozessblock ermöglichen. Eine eine kraftschlüssige Befestigung der Funktionskomponente an dem Prozessblock ermöglichende Befestigungsschnittstelle kann z. B. eine von einem Schraubenelement durchsetzbare Bohrung, insbesondere Gewindebohrung, sein oder eine solche umfassen. In Betracht kommende formschlüssige Befestigungsarten sind z. B. Klips- oder Rastbefestigungen, in Betracht kommende stoffschlüssige Befestigungsarten sind z. B. Klebe-, Löt- oder Schweißverbindungen. Abgesehen von etwaigen Benutzer- bzw. Bedienungsschnittstellen, wie z. B. eine mit einer den Betrieb der Funktionskomponenten zur Durchführung additiver Bauvorgänge steuernden Steuerungseinrichtung der Vorrichtung kommunizierenden Bedieneinrichtung, z. B. in Form eines Touch-Panels, und/oder Anschlusselementen, z. B. zum Anschluss einer externen (elektrischen) Energieversorgung für bestimmte Funktionskomponenten, müssen an der Rahmenkonstruktion keine Funktionskomponenten angeordnet oder ausgebildet sein.

Der Prozessblock nebst den an und/oder in diesem angeordneten oder ausgebildeten Funktionskomponenten stellt eine (zu der Rahmenkonstruktion) gesonderte, d. h. insbesondere unabhängig von der Rahmenkonstruktion bewegbare, Baueinheit dar; der Prozessblock bildet daher keinen Bestandteil der Rahmenkonstruktion. Der Prozessblock kann insbesondere derart innerhalb der Rahmenkonstruktion angeordnet sein, dass dieser bzw. die an und/oder in diesem angeordneten oder ausgebildeten Funktionskomponenten die Rahmenkonstruktion nicht berühren; mithin ist es denkbar, dass zwischen dem Prozessblock bzw. den an und/oder in diesem angeordneten oder ausgebildeten Funktionskomponenten kein mechanischer Kontakt besteht. Der Prozessblock bzw. die an und/oder in diesem angeordneten oder ausgebildeten Funktionskomponenten können sonach von der Rahmenkonstruktion mechanisch entkoppelt sein. Etwaige in die Rahmenkonstruktion eingebrachte Kräfte, Vibrationen, etc. können derart nicht auf den Prozessblock respektive die an und/oder in diesem angeordneten oder ausgebildeten Funktionskomponenten übertragen werden, was sich positiv auf deren Betrieb auswirkt.

Die an und/oder in dem Prozessblock angeordneten oder ausgebildeten Funktionskomponenten sind an und/oder in diesem in einer exakt definierbaren bzw. definierten räumlichen Positionierung, d. h. Anordnung und/oder Ausrichtung, angeordnet. Der Prozessblock bildet dabei das Bezugssystem für die definierte räumliche Anordnung der an und/oder in diesem angeordneten oder ausgebildeten Funktionskomponenten. Der Prozessblock weist hierfür typischerweise definierte Prozessblockachsen auf, welche ein, z. B. kartesisches, Koordinatensystem des Prozessblocks bilden können. Es ist nicht erforderlich, dass die Rahmenkonstruktion in konstruktiver Hinsicht über vergleichsweise enge Maßtoleranzen ("Toleranzen") verfügt. Bei der Rahmenkonstruktion muss es sich daher auch nicht um eine sowohl in geometrisch-konstruktiver als auch in fertigungstechnischer Hinsicht vergleichsweise aufwändige Baugruppe der Vorrichtung handeln. Vielmehr kann der Prozessblock eine in geometrisch-konstruktiver Hinsicht vergleichsweise einfach aufgebaute Baueinheit darstellen, sodass es im Vergleich weniger aufwändig ist, diese mit engen Toleranzen herzustellen, welche für die Verwendung dieses als Bezugssystem für eine exakte Positionierung der Funktionskomponenten erforderlich ist. Konkret kann es sich bei dem Prozessblock z. B. um ein Frästeil handeln.

Der Prozessblock sowie die an oder in diesem angeordneten oder ausgebildeten Funktionskomponenten können eine vorkonfigurierbare oder vorkonfigurierte, gesondert handhabbare Baugruppe bilden. Es ist also möglich, den Prozessblock mit bestimmten Funktionskomponenten auszustatten bzw. vorzukonfigurieren und derart eine vorkonfigurierte, gesondert handhabbare, d. h. insbesondere auch transportfähige, Baugruppe zu bilden. Derart lassen sich z. B. Montage-, Reparatur- und Servicearbeiten der Vorrichtung vereinfachen.

Die Funktionskomponenten können unmittelbar oder mittelbar, d. h. unter Zwischenschaltung wenigstens eines Montagebauteils, an und/oder in dem Prozessblock angeordnet sein. Für den Fall einer mittelbaren Befestigung von Funktionskomponenten können die an dem Prozessblock angeordneten Funktionskomponenten über ein an dem Prozessblock befestigbares oder befestigtes Montagebauteil an dem Prozessblock befestigt sein. Die Funktionskomponenten können dabei in einer unveränderlichen lagefesten Anordnung und Ausrichtung an dem Montagebauteil befestigt sein, das Montagebauteil kann in einer unveränderlichen lagefesten Anordnung und Ausrichtung an dem Prozessblock befestigt sein. Das Montagebauteil kann z. B. als Montageblock oder als Montagewinkel ausgebildet sein. Das Montagebauteil verfügt über enge Toleranzen, sodass über dieses an dem Prozessblock befestigte Funktionskomponenten exakt positioniert sind.

An dieser Stelle ist zu erwähnen, dass bis dato üblicherweise vorrichtungsseitig aufwändige Vorkehrungen, insbesondere durch die Vorsehung geeigneter Einstell- bzw. Verstelleinrichtungen, getroffen werden, um die Positionierung jeweiliger an der Rahmenkonstruktion befestigter Funktionskomponenten nachträglich, d. h. nach deren eigentlicher Montage, im Hinblick auf eine geforderte Positioniergenauigkeit anpassen bzw. verändern zu können. Auf derartige Einstell- bzw. Verstelleinrichtungen, welche dazu eingerichtet sind, die Positionierung jeweiliger an der Rahmenkonstruktion befestigter Funktionskomponenten nachträglich anzupassen bzw. zu verändern, kann bei der hierin beschriebenen Vorrichtung gänzlich verzichtet werden. Die geforderte exakte Positionierung jeweiliger Funktionskomponenten ist durch deren Anordnung oder Ausbildung an und/oder in dem Prozessblock gewährleistet. Wie erwähnt, liegt der Prozessblock typischerweise mit engen Toleranzen vor, was eine exakte Positionierung jeweiliger Funktionskomponenten ermöglicht.

Ein entsprechendes Montagebauteil kann wenigstens eine erste Befestigungsschnittstelle umfassen, welche zur Befestigung einer Funktionskomponente in einer unveränderlichen lagefesten Positionierung an dem Montagebauteil eingerichtet ist. Eine erste Befestigungsschnittstelle kann eine form- und/oder kraft- und/oder stoffschlüssige Befestigung der Funktionskomponente an dem Montagebauteil ermöglichen. Ein entsprechendes Montagebauteil kann ferner wenigstens eine zweite Befestigungsschnittstelle umfassen, welche zur Befestigung des Montagebauteils in einer unveränderlichen lagefesten Positionierung an dem Prozessblock eingerichtet ist. Eine zweite Befestigungsschnittstelle kann eine form- und/oder kraft- und/oder stoffschlüssige Befestigung des Montagebauteils an dem Prozessblock ermöglichen. Eine eine kraftschlüssige Befestigung der Funktionskomponente an dem Montagebauteil ermöglichende Befestigungsschnittstelle kann z. B. eine von einem Schraubenelement durchsetzbare Bohrung, insbesondere Gewindebohrung, sein oder eine solche umfassen, auch eine eine kraftschlüssige Befestigung des Montagebauteils an dem Prozessblock ermöglichende Befestigungsschnittstelle kann z. B. eine von einem Schraubenelement durchsetzbare Bohrung, insbesondere Gewindebohrung, sein oder eine solche umfassen. Form- bzw. stoffschlüssige Befestigungsarten wurden weiter oben benannt. Wenngleich die Positionierung der Funktionskomponente(n) an dem Montagebauteil bzw. die Positionierung des Montagebauteils an dem Prozessblock unveränderlich lagefest ist, kann diese (beschädigungs- bzw. zerstörungsfrei lösbar sein).

Der Prozessblock kann einen Prozessblockgrundkörper umfassen. Der Prozessblockgrundkörper kann die eine Funktionskomponente darstellende Prozesskammer der Vorrichtung begrenzen. Die Prozesskammer der Vorrichtung kann sonach durch einen entsprechenden Innenraum in dem Prozessblock(grundkörper) gebildet sein.

An dem Prozessblockgrundkörper kann wenigstens ein Bestandteil einer eine Funktionskomponente bildenden Belichtungseinrichtung, welche zur selektiven Belichtung selektiv zu verfestigender Baumaterialschichten eingerichtet ist, positionsgenau anordenbar oder angeordnet sein. Der wenigstens eine Bestandteil der Belichtungseinrichtung kann z. B. an einer freiliegenden Außenfläche des Prozessblockgrundkörpers angeordnet bzw. befestigt sein. Als Bestandteil der Belichtungseinrichtung kann z. B. eine Energiestrahlerzeugungseinrichtung und/oder eine Strahlablenkeinrichtung und/oder wenigstens ein optisches Element, insbesondere ein Filterelement, ein Objektivelement oder ein Linsenelement, der Belichtungseinrichtung an dem Prozessblockgrundkörper anordenbar oder angeordnet sein. Entsprechende Bestandteile der Belichtungseinrichtung können auch über wenigstens ein entsprechendes Montagebauteil an dem Prozessblockgrundkörper befestigt sein.

An dem Prozessblockgrundkörper kann (auch) wenigstens ein Bestandteil einer eine Funktionskomponente bildenden Beschichtungseinrichtung, welche zur Ausbildung von selektiv zu verfestigenden Baumaterialschichten in einer Bauebene der Vorrichtung eingerichtet ist, positionsgenau anordenbar oder angeordnet sein. Der wenigstens eine Bestandteil der Beschichtungseinrichtung kann z. B. an einer die Prozesskammer begrenzenden Innenfläche des Prozessblockgrundkörpers angeordnet bzw. befestigt sein. Als Bestandteil der Beschichtungseinrichtung kann eine Führungseinrichtung für ein ein, insbesondere klingenförmiges, Beschichtungswerkzeug aufweisendes Beschichtungselement und/oder ein ein, insbesondere klingenförmiges, Beschichtungswerkzeug aufweisendes Beschichtungselement an dem Prozessblockgrundkörper anordenbar oder angeordnet sein. Entsprechende Bestandteile der Beschichtungseinrichtung können auch über ein entsprechendes Montagebauteil an dem Prozessblockgrundkörper befestigt sein.

Weiterhin kann an dem Prozessblockgrundkörper kann (auch) wenigstens ein Bestandteil einer eine Funktionskomponente der Vorrichtung bildenden Erfassungseinrichtung, welche zur, optischen, Erfassung wenigstens einer, insbesondere einen prozessrelevanten (physikalischen) Parameter, wie z. B. Atmosphäre, Druck, Temperatur, Schmelzpoolgeometrie, etc. betreffenden, Erfassungsgröße eingerichtet ist, positionsgenau anordenbar oder angeordnet sein. Auch der wenigstens eine Bestandteil der Erfassungseinrichtung kann z. B. an einer die Prozesskammer begrenzenden Innenfläche des Prozessblockgrundkörpers angeordnet bzw. befestigt sein. Als Bestandteil der Erfassungseinrichtung kann z. B. ein optisches oder thermisches Erfassungselement, insbesondere eine optische oder thermische Kamera, an dem Prozessblockgrundkörper anordenbar oder angeordnet sein. Entsprechende Bestandteile der Erfassungseinrichtung können auch über ein entsprechendes Montagebauteil an dem Prozessblockgrundkörper befestigt sein.

An dem Prozessblockgrundkörper kann ferner ein einen Pulveraufnahmeraum begrenzendes Pulvermodul positionsgenau anordenbar oder angeordnet sein. Das Pulvermodul kann einen bodenseitigen Abschluss des Prozessblockgrundkörpers bilden. Bei dem Pulvermodul kann es sich insbesondere um ein Baumodul, in dessen Pulveraufnahmeraum (Bauraum) die eigentliche additive Herstellung dreidimensionaler Objekte erfolgt, handeln.

Zur Realisierung einer Schwingungsentkopplung des Prozessblocks von der Rahmenkonstruktion kann zwischen dem Prozessblock und der Rahmenkonstruktion wenigstens ein Dämpfungs- bzw. Schwingungsentkopplungselement angeordnet oder ausgebildet sein. Typischerweise sind für eine ausreichende Schwingungsentkopplung mehrere Dämpfungs- bzw. Schwingungsentkopplungselement zwischen den Prozessblock und die Rahmenkonstruktion zu schalten. Ein jeweiliges Dämpfungs- bzw. Schwingungsentkopplungselement kann z. B. als elastischer oder viskoelastischer Körper, insbesondere als elastischer Federkörper oder als viskoelastischer Elastomerkörper, ausgebildet sein.

Dem Prozessblock kann eine Führungseinrichtung zugeordnet sein. Die Führungseinrichtung kann dazu eingerichtet sein, den Prozessblock in eine Betriebsposition, in welcher der Prozessblock innerhalb der Rahmenkonstruktion angeordnet ist, und in eine Nichtbetriebsposition, in welcher der Prozessblock außerhalb der Rahmenkonstruktion angeordnet ist, und umgekehrt, zu bewegen. Denkbar ist es auch, dass die Führungseinrichtung eingerichtet ist, den Prozessblock in mehrere definierte Positionen innerhalb der Rahmenkonstruktion zu bewegen, d. h. gegebenenfalls auch zu drehen. Eine entsprechende Führungseinrichtung kann geeignete, z. B. schienenartige bzw. -förmige, Führungselemente umfassen, entlang welcher der Prozessblock, z. B. zwischen der Betriebsposition und der Nichtbetriebsposition, bewegbar ist. Durch die Vorsehung einer entsprechenden Führungseinrichtung können z. B. Montage-, Reparatur- und Servicearbeiten der Vorrichtung vereinfacht werden.

Der Prozessblock kann wenigstens ein Anschlusselement, z. B. zum Anschluss einer externen (elektrischen) Energie- oder Inertgasversorgung für die an oder in dem Prozessblock angeordneten oder ausgebildeten Funktionskomponenten, umfassen. Der Prozessblock kann sonach eine (weitgehend) autarke Funktionseinheit bilden.

Die Erfindung ist anhand von Ausführungsbeispielen in den Zeichnungsfiguren näher erläutert. Dabei zeigt die
- Fig. 1: eine Prinzipdarstellung einer Vorrichtung gemäß einem Ausführungsbeispiel; und
- Fig. 2: eine Prinzipdarstellung einer Montagesituation einer Funktionskomponente der Vorrichtung gemäß einem Ausführungsbeispiel.

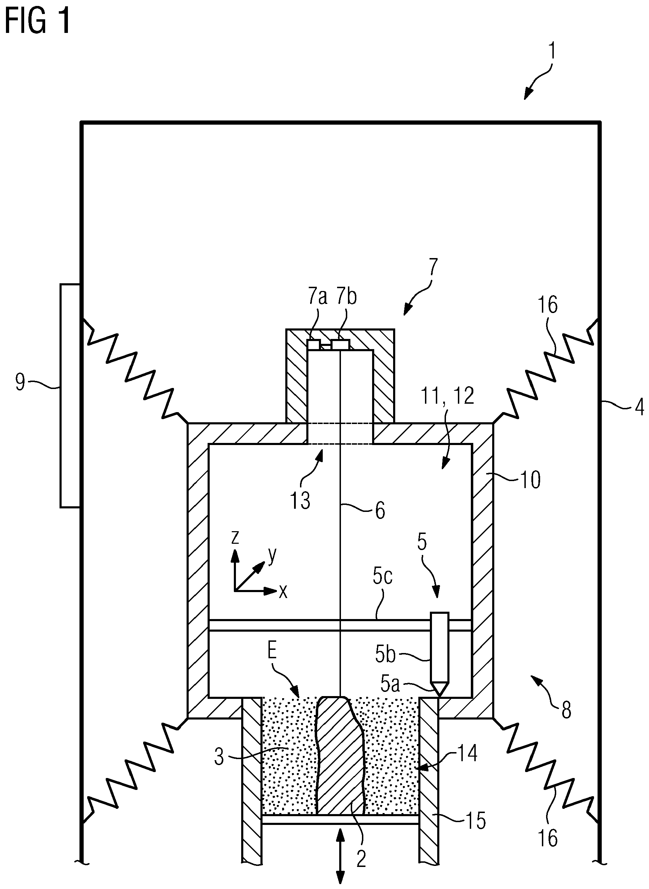

Fig. 1 zeigt eine Prinzipdarstellung einer Vorrichtung 1 gemäß einem Ausführungsbeispiel. In Fig. 1 ist nur der für die Erläuterung des nachfolgend beschriebenen Prinzips relevante Ausschnitt der Vorrichtung 1 in einer geschnittenen Ansicht gezeigt.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Laserstrahls 6. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als Laser-CUSING®-Vorrichtung, d. h. als Vorrichtung zur Durchführung selektiver Laserschmelzverfahren), ausgebildet sein.

Die Vorrichtung 1 umfasst eine ein oder mehrere Rahmenkonstruktionselemente (nicht bezeichnet) umfassende äußere Rahmenkonstruktion 4. Die Rahmenkonstruktion 4 bildet eine (geschlossene) Gehäuse- bzw. Verkleidungskonstruktion der Vorrichtung 1. Die äußere Gestalt der Vorrichtung 1 ist sonach (im Wesentlichen) durch die Rahmenkonstruktion definiert.

Die Vorrichtung 1 umfasst die zur Durchführung additiver Bauvorgänge erforderlichen Funktionskomponenten. Hierzu zählt eine Beschichtungseinrichtung 5, welche zur Ausbildung selektiv zu verfestigender Baumaterialschichten (in der Bauebene E der Vorrichtung 1) eingerichtet ist, und eine Belichtungseinrichtung 7, welche zur selektiven Belichtung selektiv zu verfestigender Baumaterialschichten (in der Bauebene E der Vorrichtung 1) eingerichtet ist. Die Beschichtungseinrichtung 5 umfasst mehrere Bestandteile, nämlich ein ein, insbesondere klingenförmiges, Beschichtungswerkzeug 5a umfassendes Beschichtungselement 5b sowie eine Führungseinrichtung 5c zur Führung des Beschichtungselements 5b entlang einer definierten Bewegungsbahn. Auch die Belichtungseinrichtung 7 umfasst mehrere Bestandteile nämlich eine Strahlerzeugungseinrichtung 7a zur Erzeugung eines Laserstrahls 6, eine Strahlablenkeinrichtung 7b zur Ablenkung des von der Strahlerzeugungseinrichtung 7a erzeugten Laserstrahls 6 auf einen zu belichtenden Bereich einer selektiv zu verfestigenden Baumaterialschicht sowie diverse optische Elemente (nicht gezeigt), wie z. B. Filterelemente, Objektivelemente, Linsenelemente, etc., welche typischerweise zwischen der Strahlerzeugungseinrichtung 7a und der Strahlablenkeinrichtung 7b angeordnet sind.

Die Vorrichtung 1 umfasst neben der Rahmenkonstruktion 4 einen innerhalb der Rahmenkonstruktion 4 angeordneten Prozessblock 8. Ersichtlich sind die genannten Funktionskomponenten der Vorrichtung 1 an und/oder in dem Prozessblock 8 angeordnet. Der Prozessblock 8 umfasst sonach eine oder mehrere Befestigungsschnittstellen (nicht näher bezeichnet), welche zur Befestigung wenigstens einer Funktionskomponente an dem Prozessblock 8 eingerichtet sind. Jeweilige Befestigungsschnittstellen können eine form- und/oder kraft- und/oder stoffschlüssige Befestigung einer Funktionskomponente an dem Prozessblock 8 ermöglichen. Eine eine kraftschlüssige Befestigung der Funktionskomponente an dem Prozessblock 8 ermöglichende Befestigungsschnittstelle kann eine von einem Schraubenelement durchsetzbare Bohrung, insbesondere Gewindebohrung, sein oder eine solche umfassen. In Betracht kommende formschlüssige Befestigungsarten sind z. B. Klips- oder Rastbefestigungen, in Betracht kommende stoffschlüssige Befestigungsarten sind z. B. Klebe-, Löt- oder Schweißverbindungen. Abgesehen von etwaigen Benutzer- bzw. Bedienungsschnittstellen (nicht gezeigt), wie z. B. eine mit einer den Betrieb der Funktionskomponenten zur Durchführung additiver Bauvorgänge steuernden Steuerungseinrichtung (nicht gezeigt) kommunizierenden Bedieneinrichtung 9, z. B. in Form eines Touch-Panels, und/oder Anschlusselementen (nicht gezeigt), z. B. zum Anschluss einer externen (elektrischen) Energieversorgung für bestimmte Funktionskomponenten, müssen an der Rahmenkonstruktion 4 keine Funktionskomponenten angeordnet oder ausgebildet sein.

Der Prozessblock 8 nebst den an und/oder in diesem angeordneten bzw. ausgebildeten Funktionskomponenten stellt eine (zu der Rahmenkonstruktion 4) gesonderte, d. h. insbesondere unabhängig von der Rahmenkonstruktion 4 bewegbare, Baueinheit dar; ersichtlich bildet der Prozessblock 8 keinen Bestandteil der Rahmenkonstruktion 4. Der Prozessblock 8 ist derart innerhalb der Rahmenkonstruktion 4 angeordnet, dass dieser bzw. die an und/oder in diesem angeordneten oder ausgebildeten Funktionskomponenten die Rahmenkonstruktion 4 nicht berühren; zwischen dem Prozessblock 8 bzw. den an und/oder in diesem angeordneten oder ausgebildeten Funktionskomponenten und der Rahmenkonstruktion 4 besteht kein mechanischer Kontakt. Der Prozessblock bzw. die an und/oder in diesem angeordneten oder ausgebildeten Funktionskomponenten sind sonach von der Rahmenkonstruktion 4 mechanisch entkoppelt sein. Etwaige in die Rahmenkonstruktion 4 eingebrachte Kräfte, Vibrationen, etc. können derart nicht auf den Prozessblock 8 respektive die an und/oder in diesem angeordneten oder ausgebildeten Funktionskomponenten übertragen werden, was sich positiv auf deren Betrieb auswirkt.

Die an und/oder in dem Prozessblock 8 angeordneten bzw. ausgebildeten Funktionskomponenten sind an und/oder in diesem in einer exakt definierbaren bzw. definierten räumlichen Positionierung, d. h. Anordnung und/oder Ausrichtung, angeordnet. Der Prozessblock 8 bildet dabei das Bezugssystem für die definierte räumliche Anordnung der an und/oder in diesem angeordneten bzw. ausgebildeten Funktionskomponenten. Hierfür weist der Prozessblock 8 definierte Prozessblockachsen (x-, y- und z-Achse) auf, welche ein, z. B. kartesisches, Koordinatensystem des Prozessblocks 8 bilden. Der Prozessblock 8 stellt eine in geometrisch-konstruktiver Hinsicht vergleichsweise einfach aufgebaute Baueinheit dar - konkret kann es sich bei dem Prozessblock 8 z. B. um ein Frästeil handeln -, welche(s) mit vergleichsweise geringem Aufwand mit engen Toleranzen herstellbar ist. Entsprechend enge Toleranzen sind für die Verwendung des Prozessblocks 8 als Bezugssystem für eine exakte Positionierung der Funktionskomponenten erforderlich.

Der Prozessblock 8 umfasst einen Prozessblockgrundkörper 10. Der Prozessblockgrundkörper 10 umfasst in dem Ausführungsbeispiel eine oder mehrere, abschnittsweise (recht)winklig zueinander verlaufende, Wandungen bzw. Wandungsabschnitte (nicht näher bezeichnet), welche einen Innenraum 11 begrenzen. Der Innenraum 11 des Prozessblockgrundkörpers 10 bildet die eine Funktionskomponente darstellende (inertisierbare) Prozesskammer 12 der Vorrichtung 1. Die Prozesskammer 12 der Vorrichtung 1 ist sonach in dem Prozessblock 8 ausgebildet.

An dem Prozessblockgrundkörper 10 sind ferner die Bestandteile, d. h. die Laserstrahlerzeugungseinrichtung 7a, die Strahlablenkeinrichtung 7b, die optischen Elemente, der eine Funktionskomponente bildenden Belichtungseinrichtung 7 positionsgenau angeordnet. Die Bestandteile der Belichtungseinrichtung 7 sind in dem Ausführungsbeispiel an einer durch eine mit einer Durchtrittsöffnung 13 für den Laserstrahl 6 versehenen oberen Wandung des Prozessblockgrundkörpers 10 gebildeten freiliegenden Außenfläche des Prozessblockgrundkörpers 10 angeordnet bzw. befestigt.

An dem Prozessblockgrundkörper 10 sind weiter auch die Bestandteile, d. h. das Beschichtungswerkzeug 5a, das Beschichtungselement 5b, die Führungseinrichtung 5c, der eine Funktionskomponente bildenden Beschichtungseinrichtung 5 positionsgenau angeordnet. Die Bestandteile der Beschichtungseinrichtung 5 sind in dem Ausführungsbeispiel an einer durch eine den Innenraum 11 bzw. die Prozesskammer 12 begrenzenden Wandung gebildeten Innenfläche des Prozessblockgrundkörpers 10 angeordnet bzw. befestigt.

Weiterhin können an dem Prozessblockgrundkörper 10 (auch) Bestandteile (nicht gezeigt) einer eine Funktionskomponente der Vorrichtung 1 bildenden Erfassungseinrichtung (nicht gezeigt), welche zur, optischen, Erfassung wenigstens einer, insbesondere einen prozessrelevanten (physikalischen) Parameter, wie z. B. Atmosphäre, Druck, Temperatur, Schmelzpoolgeometrie, etc. betreffenden, Erfassungsgröße eingerichtet ist, positionsgenau anordenbar bzw. angeordnet sein. Auch die Bestandteile der Erfassungseinrichtung können kann z. B. an einer entsprechenden Innenfläche des Prozessblockgrundkörpers 10 angeordnet bzw. befestigt sein. Als Bestandteil der Erfassungseinrichtung kann z. B. ein optisches oder thermisches Erfassungselement, insbesondere eine optische oder thermische Kamera, an dem Prozessblockgrundkörper 10 anordenbar oder angeordnet sein.

An dem Prozessblockgrundkörper 10 ist ferner ein einen Pulveraufnahmeraum 14 begrenzendes Pulvermodul 15 positionsgenau angeordnet. Das Pulvermodul 15 bildet einen bodenseitigen Abschluss des Prozessblockgrundkörpers 10. Bei dem Pulvermodul 15 handelt es sich um ein Baumodul, in dessen Pulveraufnahmeraum 14 (Bauraum) die eigentliche additive Herstellung dreidimensionaler Objekte 2 erfolgt.

Der Prozessblock 8 sowie die an oder in diesem angeordneten oder ausgebildeten Funktionskomponenten können eine vorkonfigurierbare oder vorkonfigurierte, gesondert handhabbare Baugruppe bilden. Es ist also möglich, den Prozessblock 8 mit bestimmten Funktionskomponenten auszustatten bzw. vorzukonfigurieren und derart eine vorkonfigurierte, gesondert handhabbare, d. h. insbesondere auch transportfähige, Baugruppe zu bilden.

Zur Realisierung einer Schwingungsentkopplung des Prozessblocks 8 von der Rahmenkonstruktion 4 sind in dem Ausführungsbeispiel zwischen dem Prozessblock 8 und der Rahmenkonstruktion 4 angeordnete bzw. ausgebildete Dämpfungs- bzw. Schwingungsentkopplungselemente 16 vorhanden. Ein jeweiliges Dämpfungs- bzw. Schwingungsentkopplungselement 16 kann z. B. als elastischer oder viskoelastischer Körper, insbesondere als elastischer Federkörper oder als viskoelastischer Elastomerkörper, ausgebildet sein. Entsprechende Dämpfungs- bzw. Schwingungsentkopplungselemente 16 sind optional vorhanden.

Dem Prozessblock 8 kann eine Führungseinrichtung (nicht gezeigt) zugeordnet sein. Die Führungseinrichtung ist z. B. dazu eingerichtet, den Prozessblock 8 in eine Betriebsposition, in welcher der Prozessblock 8 innerhalb der Rahmenkonstruktion 4 angeordnet ist, und in eine Nichtbetriebsposition, in welcher der Prozessblock 8 außerhalb der Rahmenkonstruktion 4 angeordnet ist, und umgekehrt, zu bewegen. Denkbar ist es auch, dass die Führungseinrichtung eingerichtet ist, den Prozessblock 8 in mehrere definierte Positionen innerhalb der Rahmenkonstruktion 4 zu bewegen, d. h. gegebenenfalls auch zu drehen. Eine entsprechende Führungseinrichtung kann geeignete, z. B. schienenartige bzw. -förmige, Führungselemente umfassen, entlang welcher der Prozessblock 8 zwischen verschiedenen Positionen, d. h. z. B. zwischen der Betriebsposition und der Nichtbetriebsposition, bewegbar ist.

Der Prozessblock 8 kann wenigstens ein Anschlusselement (nicht gezeigt), z. B. zum Anschluss einer externen (elektrischen) Energie- oder Inertgasversorgung für die an oder in dem Prozessblock 8 angeordneten oder ausgebildeten Funktionskomponenten, umfassen. Entsprechende Anschlusselemente können z. B. an dem Prozessblockgrundkörper 10 angeordnet oder ausgebildet sein.

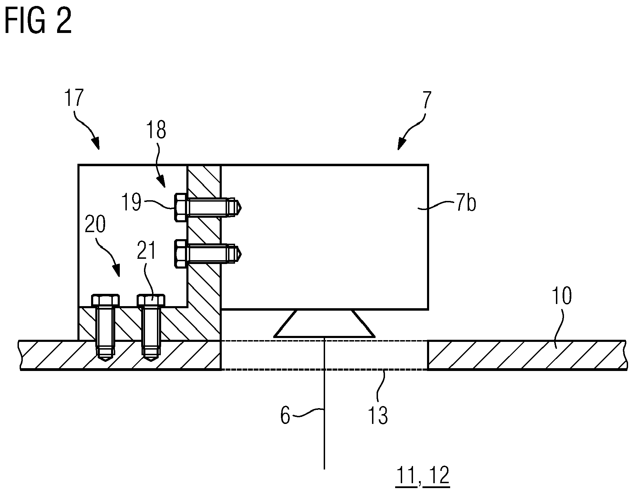

Grundsätzlich können die Funktionskomponenten können unmittelbar oder mittelbar, d. h. unter Zwischenschaltung wenigstens eines Montagebauteils 17 (vgl. Fig. 2), an und/oder in dem Prozessblock 8 angeordnet sein.

Fig. 2 zeigt eine Prinzipdarstellung einer Montagesituation einer Funktionskomponente der Vorrichtung 1 gemäß einem Ausführungsbeispiel.

In Fig. 2 ist der Fall einer mittelbaren Befestigung einer Funktionskomponente, hier beispielhaft einer Strahlablenkeinrichtung 7a als Bestandteil der Belichtungseinrichtung 7, gezeigt. Die Funktionskomponente ist über ein an dem Prozessblock 8 bzw. dem Prozessblockgrundkörper 10 befestigtes Montagebauteil 17 an dem Prozessblock 8 befestigt. Die Funktionskomponente ist dabei in einer unveränderlichen lagefesten Anordnung und Ausrichtung an dem Montagebauteil 17 befestigt, das Montagebauteil 17 ist in einer unveränderlichen lagefesten Anordnung und Ausrichtung an dem Prozessblock 8 befestigt. Das Montagebauteil 17, welches z. B. als Montageblock oder als Montagewinkel ausgebildet sein kann, verfügt über enge Toleranzen, sodass die über dieses an dem Prozessblock 8 befestigte Funktionskomponente exakt positioniert ist.

Das Montagebauteil 17 umfasst wenigstens eine erste Befestigungsschnittstelle 18, welche zur Befestigung der Funktionskomponente in einer unveränderlichen lagefesten Positionierung an dem Montagebauteil 17 eingerichtet ist. Die erste Befestigungsschnittstelle 18 ermöglicht in dem Ausführungsbeispiel eine kraftschlüssige Befestigung der Funktionskomponente an dem Montagebauteil 17. Konkret umfasst die erste Befestigungsschnittstelle 18 mehrere von einem Schraubenelement 19 durchsetzbare Bohrungen (nicht gezeigt), insbesondere Gewindebohrungen.

Das Montagebauteil 17 umfasst ferner wenigstens eine zweite Befestigungsschnittstelle 20, welche zur Befestigung des Montagebauteils 17 in einer unveränderlichen lagefesten Positionierung an dem Prozessblock 8 eingerichtet ist. Auch die zweite Befestigungsschnittstelle 20 ermöglicht in dem Ausführungsbeispiel eine kraftschlüssige Befestigung der Funktionskomponente an dem Prozessblock 8. 4. Konkret umfasst auch die zweite Befestigungsschnittstelle 20 mehrere von einem Schraubenelement 21 durchsetzbare Bohrungen (nicht gezeigt), insbesondere Gewindebohrungen.

Wenngleich die Positionierung der Funktionskomponente an dem Montagebauteil 17 bzw. die Positionierung des Montagebauteils 17 an dem Prozessblock 8 unveränderlich lagefest ist, kann diese, wie anhand der Schraubbefestigungen ersichtlich, (beschädigungs- bzw. zerstörungsfrei lösbar sein).

## Patentansprüche

1. Vorrichtung (1) zur additiven Herstellung dreidimensionaler Objekte (2) durch sukzessives schichtweises selektives Belichten und damit einhergehendes Verfestigen von Baumaterialschichten aus einem vermittels eines Energiestrahls (6) verfestigbaren Baumaterial (3), umfassend eine ein oder mehrere Rahmenkonstruktionselemente umfassende äußere Rahmenkonstruktion (4), **gekennzeichnet durch** einen als gesonderte Baueinheit innerhalb der äußeren Rahmenkonstruktion (4) anordenbaren oder angeordneten Prozessblock (8), wobei an und/oder in dem Prozessblock (8) mehrere Funktionskomponenten der Vorrichtung (1) in einer definierten räumlichen Anordnung und/oder Ausrichtung angeordnet oder ausgebildet sind, wobei der Prozessblock (8) das Bezugssystem für die definierte räumliche Anordnung der an und/oder in diesem angeordneten oder ausgebildeten Funktionskomponenten der Vorrichtung (1) bildet.

2. Vorrichtung nach Anspruch 1, **dadurch gekennzeichnet, dass** der innerhalb der äußeren Rahmenkonstruktion (4) angeordnete Prozessblock (8) sowie die an oder in diesem angeordneten oder ausgebildeten Funktionskomponenten der Vorrichtung (1) die äußere Rahmenkonstruktion (4) nicht berühren.

3. Vorrichtung nach Anspruch 1 oder 2, **dadurch gekennzeichnet, dass** der Prozessblock (8) sowie die an oder in diesem angeordneten oder ausgebildeten Funktionskomponenten der Vorrichtung (1) eine vorkonfigurierbare oder vorkonfigurierte, gesondert handhabbare Baugruppe bilden.

4. Vorrichtung nach einem der vorhergehenden Ansprüche, **dadurch gekennzeichnet, dass** die an dem Prozessblock (8) angeordneten Funktionskomponenten der Vorrichtung (1) über ein an dem Prozessblock (8) befestigbares oder befestigtes Montagebauteil (17) an dem Prozessblock (8) befestigt sind, wobei die Funktionskomponenten in einer unveränderlichen lagefesten Anordnung und Ausrichtung an dem Montagebauteil (17) befestigt sind und das Montagebauteil (17) in einer unveränderlichen lagefesten Anordnung und Ausrichtung an dem Prozessblock (8) befestigt ist.

5. Vorrichtung nach einem der vorhergehenden Ansprüche, **dadurch gekennzeichnet, dass** der Prozessblock (8) einen Prozessblockgrundkörper (10) umfasst, wobei der Prozessblockgrundkörper (10) eine Prozesskammer (12) der Vorrichtung (1) begrenzt.

6. Vorrichtung nach einem der vorhergehenden Ansprüche, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Belichtungseinrichtung (7), welche zur selektiven Belichtung selektiv zu verfestigender Baumaterialschichten eingerichtet ist, positionsgenau an dem Prozessblockgrundkörper (10) anordenbar oder angeordnet sind.

7. Vorrichtung nach Anspruch 6, **dadurch gekennzeichnet, dass** als Bestandteil der Belichtungseinrichtung (7) eine Energiestrahlerzeugungseinrichtung (7b) und/oder eine Strahlablenkeinrichtung (7a) und/oder wenigstens ein optisches Element, insbesondere ein Filterelement, ein Objektivelement oder ein Linsenelement, der Belichtungseinrichtung (7) an dem Prozessblockgrundkörper (10) anordenbar oder angeordnet sind.

8. Vorrichtung nach einem der vorhergehenden Ansprüche, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Beschichtungseinrichtung (5), welche zur Ausbildung von selektiv zu verfestigenden Baumaterialschichten in einer Bauebene (E) der Vorrichtung (1) eingerichtet ist, an dem Prozessblockgrundkörper (10) positionsgenau anordenbar oder angeordnet sind.

9. Vorrichtung nach Anspruch 8, **dadurch gekennzeichnet, dass** als Bestandteil der Beschichtungseinrichtung (5) eine Führungseinrichtung (5c) für ein ein, insbesondere klingenförmiges, Beschichtungswerkzeug (5a) aufweisendes Beschichtungselement (5b) und/oder ein ein, insbesondere klingenförmiges, Beschichtungswerkzeug (5a) aufweisendes Beschichtungselement (5b) an dem Prozessblockgrundkörper (10) anordenbar oder angeordnet ist.

10. Vorrichtung nach einem der vorhergehenden Ansprüche, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Erfassungseinrichtung, welche zur, optischen, Erfassung wenigstens einer, insbesondere einen prozessrelevanten Parameter betreffenden, Erfassungsgröße eingerichtet ist, an dem Prozessblockgrundkörper (10) positionsgenau anordenbar oder angeordnet sind.

11. Vorrichtung nach Anspruch 10, **dadurch gekennzeichnet, dass** als Bestandteil der Erfassungseinrichtung ein optisches oder thermisches Erfassungselement, insbesondere eine Kamera, anordenbar oder angeordnet ist.

12. Vorrichtung nach einem der vorhergehenden Ansprüche, **dadurch gekennzeichnet, dass** der Prozessblock (8) einen Prozessblockgrundkörper (10) umfasst, wobei ein einen Pulveraufnahmeraum (14) begrenzendes Pulvermodul (15) positionsgenau an dem Prozessblockgrundkörper (10) anordenbar oder angeordnet ist.

13. Vorrichtung nach einem der vorhergehenden Ansprüche, **dadurch gekennzeichnet, dass** zwischen dem Prozessblock (8(und der äußeren Rahmenkonstruktion (4) wenigstens ein Schwingungsentkopplungselement (16) zur Schwingungsentkopplung des Prozessblocks (8) von der äußeren Rahmenkonstruktion (4) angeordnet oder ausgebildet ist.

14. Vorrichtung nach einem der vorhergehenden Ansprüche, **gekennzeichnet durch** eine dem Prozessblock (8) zugeordnete Führungseinrichtung, wobei die Führungseinrichtung dazu eingerichtet ist, den Prozessblock (8) in eine Betriebsposition, in welcher der Prozessblock (8) innerhalb der äußeren Rahmenkonstruktion (4) angeordnet ist, und in eine Nichtbetriebsposition, in welcher der Prozessblock (8) außerhalb der äußeren Rahmenkonstruktion (4) angeordnet ist, zu bewegen.

15. Vorrichtung nach einem der vorhergehenden Ansprüche, **dadurch gekennzeichnet, dass** der Prozessblock (8) wenigstens ein Anschlusselement zum Anschluss einer externen Energieversorgung für die an oder in dem Prozessblock (8) angeordneten oder ausgebildeten Funktionskomponenten der Vorrichtung (1) umfasst.
